Europäisches Patentamt

European Patent Office

Office européen des brevets

(11) Veröffentlichungsnummer: **0 599 139 A2**

# EUROPÄISCHE PATENTANMELDUNG

(21) Anmeldenummer: 93118250.5

(51) Int. Cl.5: **H04N 7/137**

(22) Anmeldetag: **11.11.93**

(30) Priorität: **23.11.92 DE 4239047**

(43) Veröffentlichungstag der Anmeldung:
**01.06.94 Patentblatt 94/22**

(84) Benannte Vertragsstaaten:
**AT CH DE FR GB LI NL**

(71) Anmelder: **ANT Nachrichtentechnik GmbH**
**Gerberstrasse 33**
**D-71522 Backnang(DE)**

(72) Erfinder: **Mayer, Jörg, Dipl.-Ing.**
**Obere Waiblinger Strasse 120**
**D-70374 Stuttgart(DE)**

(54) **Verfahren zur Aufbereitung von Prädiktionswerten bei der DPCM-Prädiktionscodierung, insbesondere von digitalisierten "composite video" Signalen, sowie Prädiktor und Anwendung.**

(57) Zur Aufbereitung von Prädiktionswerten für die DPCM-Codierung wird ein aktueller Prädiktionswert ($P_n$) aus Vergangenheitswerten ($P_{n-3}$, $P_{n-2}$, $P_{n-1}$) zusammengesetzt.

Damit bei einer Abweichung der Abtastfrequenz von einem ganzzahligen Vielfachen der Unterträgerfrequenz keine Störungen des Prädiktionssignals auftreten, werden die Vergangenheitswerte ($P_{n-3}$, $P_{n-2}$, $P_{n-1}$) bei der Zusammensetzung eines aktuellen Prädiktionswertes ($P_n$) so gewichtet (G1, G2, G3), daß der Einfluß des Unterträgers - Farbträgers - kompensiert wird.

Durch die freie Wahl der Abtastfrequenz, unabhägig von einem Unterträger, ist es möglich die abgetasteten Signale vorteilhaft in Containern der "Synchronen Digitalen Hierarchie"(SDH) unterzubringen.

Fig. 3

Die Erfindung betrifft ein Verfahren zur Aufbereitung von Prädiktionswerten bei der DPCM-Prädiktionscodierung, sowie eine Prädiktor und eine Anwendung des Verfahrens bzw. des Prädiktors.

In zahlreichen Veröffentlichungen zur DPCM-Codierung bei "composite color television" oder "composite video" Signalen (DE 36 42 394 A1, DE 37 38 851 A1, US 4,137,549) wird darauf hingewiesen, daß die Abtastfrequenz für das Quellsignal ein Vielfaches der Farbträgerfrequenz sein muß, damit zufriedenstellende Prädiktionswerte erreicht werden.

Aus US 4,137,549 und US 4,791,483 ist es bekannt Farbträgersignale zu unterdrücken. Bei der US 4,137,549 werden bei der Aufbereitung von Prädiktionswerten mindestens drei Prädiktionswerte aus der Vergangenheit zu einem aktuellen Prädiktionswert zusammengesetzt. Die Prädiktionswerte werden bei der Zusammensetzung entsprechend gewichtet.

Die Anordnung gemäß US 4,137,549 besteht aus mindestens drei in Kette geschalteten Verzögerungsgliedern mit daran anschließenden Gewichtungs- und Verknüpfungswerken.
Die US 4,791,483 weist darüber hinaus darauf hin, daß durch die Unterdrückung des Farbträgers der Prädiktionsfehler bei der DPCM-Prädiktionscodierung klein gehalten werden kann, was für eine sich anschließende Quantisierung und Entropiecodierung vorteilhaft ist.

Aufgabe der Erfindung ist es das Verfahren eingangs genannter Art so weiterzubilden, daß bei freier Wahl der Abtastfrequenz für das Quellbild der Prädiktionsfehler klein gehalten werden kann. Außerdem soll ein Prädiktor hierzu sowie eine Anwendung aufgezeigt werden. Diese Aufgabe wird hinsichtlich des Verfahrens durch die Schritte des Anspruchs 1, hinsichtlich des Prädiktors durch die Merkmale des Anspruchs 4 und hinsichtlich der Anwendung durch die Merkmale des Anspruchs 7 gelöst. Die weiteren Ansprüche zeigen Weiterbildungen des Verfahrens, des Prädiktors oder eine vorteilhafte Anwendung auf.

Die Erfindung beruht auf folgenden Erkenntnissen:
Bei der Wahl der Abtastfrequenz des Quellsignals als Vielfaches eines Unterträgers im Quellsignal, z.B. des Farbträgers in einem "composite video" Signal, sind zwar Prädiktionsfehler, die sonst durch diesen Unterträger auftreten könnten gering, aber eine solche Abtastung kann ungünstig sein für die Weiterverarbeitung des DPCM-Signals, insbesondere bei Unterbringung solcher DPCM-Signale in Containern der "Synchronen Digitalen Hierarchie" (SDH). Durch die Maßnahmen der Erfindung kann die Abtastfrequenz hinsichtlich der Weiterverarbeitung günstig gewählt werden, ohne daß durch die Verletzung der Forderung "Abtastfrequenz = ganzzahliges Vielfaches eines Unterträgers" das DPCM-Signal verschlechtert wird. Bei Ändern der Abtastfrequenz geht bei der Erfindung weder der mittlere Grauwert des Bildsignals verloren noch tritt eine Verstimmung des Prädiktors ein, was mit einer Zunahme der Prädiktionsfehler verbunden wäre. Eine Entropiecodierung, z.B. eine Huffmann-Codierung, ist auch bei nichtganzzahliger Wahl der Abtastfrequenz gegenüber dem Farbträger ohne weitere Zusatzmaßnahmen möglich.

Die Erfindung ist zur Aufbereitung von Prädiktionswerten sowohl in horizontaler als auch in vertikaler Richtung geeignet. Anhand der Zeichnungen werden nun Ausführungsbeispiele der Erfindung näher erläutert. Es zeigen
Fig.1 das Prinzip der DPCM-Codierung,
Fig.2 eine Quantisierungskennlinie,
Fig.3 ein Prinzipschaltbild eines Prädiktors nach der Erfindung,
Fig.4 einen Prädiktor nach der Erfindung mit reduziertem Multiplizierer-Aufwand.

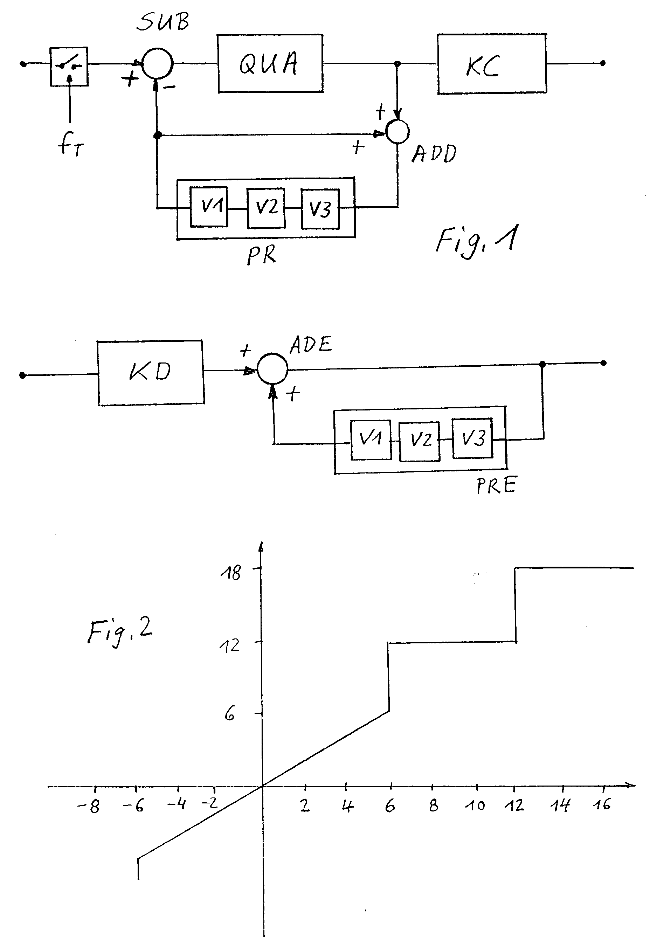

Wie Fig.1 zeigt, ist für eine DPCM-Übertragung eine sendeseitige und eine empfangsseitige Signalaufbereitung vorgesehen. Bei der sendeseitigen Aufbereitung wird ein Quellsignal, z.B. eine Bild - und/oder Tonsequenz, mit einer Abtastfrequenz $f_T$ abgetastet. Das abgetastete Quellsignal wird einem Subtrahierer SUB am Minuendeneingang zugeführt. Der Subtrahendeneingang des Subtrahierers SUB wird mit einem Prädiktionssignal, welches von einem Prädiktor PR geliefert wird, beaufschlagt. Am Ausgang des Subtrahierers SUB erscheint dann ein Prädiktionsfehlersignal, welches einem Quantisierer QUA zugeführt wird. Der Quantisierer quantisiert das Prädiktionsfehlersignal gemäß der in Fig.2 dargestellten Quantisierungskennlinie. Im Bereich kleiner Quantisierungsfehler beispielsweise zwischen 0 und 6 wird linear quantisiert. Für Quantisierungsfehler $D_n$ mit $n > 6$ wird nur noch grob und nichtlinear quantisiert. Das Ausgangssignal des Quantisierers QUA wird, falls der Quantisierungsfehler übertragen werden soll, einem Kanalcoder KC, z.B. einem Entropiecoder mit Huffmann-Codierung, zugeführt, der neben der DPCM-Codierung eine weitere Datenreduktion erzielt.

Das Ausgangssignal des Quantisierers QUA wird über einen Addierer ADD dem Prädiktor PR zugeführt. Dieser Addierer ADD addiert zum Ausgangssignal des Quantisierers das durch den Prädiktor ermittelte Prädiktionssignal. Empfangsseitig muß eine zur sendeseitigen Aufbereitung entsprechende Rückwandlung erfolgen. Dazu ist, wie Fig.1 zeigt, ein Kanaldecoder KD vorgesehen mit nachgeschaltetem Addierer ADE, der zum empfangenen Prädiktionsfehler den mit einem empfangsseitigen Prädiktor PRE ermittelten Prädiktionswert addiert. Am Ausgang der empfangsseitigen Aufbereitung ist entweder ein D/A-Wandler vorgesehen oder es erfolgt eine digitale Weiterverarbeitung des digitalen Empfangssignals.

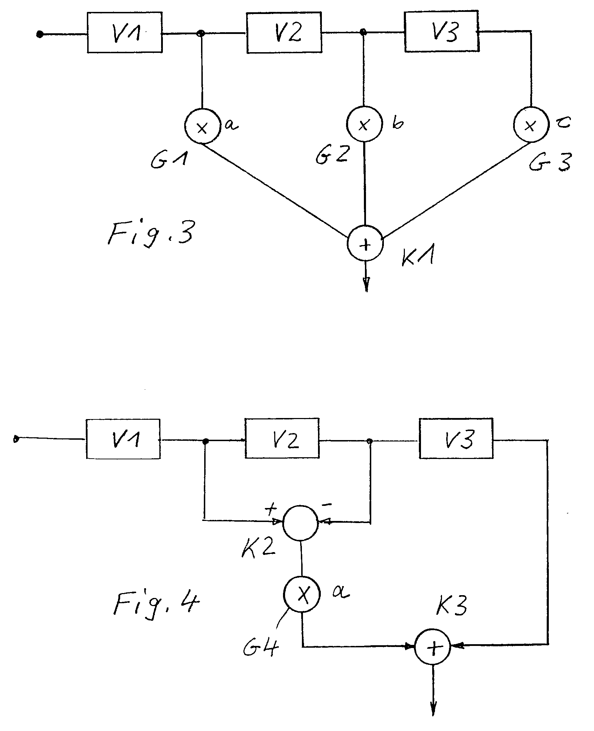

Die Prädiktoren PR und PRE bestehen aus Verzögerungsgliedern und Verknüpfungsschaltungen, wobei die Verzögerung dieser Verzögerungsglieder gerade so gewählt ist, daß jeweils eine Verzögerung um ein Zeichen der Quellsequenz, z.B. eine Verzögerung um dem Abstand zweier aufeinanderfolgender Bildpunkte bei einer Prädiktion in z.B. horizontaler Richtung oder eine Verzögerung um eine Zeilendauer bei einer Prädiktion in z.B. vertikaler Richtung, eintritt. Bei den in Fig.1 dargestellten Prädiktoren PR und PRE wird mit den Verzögerungsgliedern V1, V2 und V3 gerade eine Verzögerung von drei Bildpunkten erreicht. Wenn die Abtastfrequenz $f_T$ bei einem zu verarbeitenden "composite video" Signal, z.B. einem PAL-Farbsignal, gerade dem dreifachen Wert des Farbträgersignals von z.B. 4,434 MHz entspricht, treten keine Störungen des Prädiktionsfehlers hervorgerufen durch den Farbträger auf. Soll jedoch die Abtastfrequenz $f_T$ kein ganzzahliges Vielfaches der Farbträgerfrequenz sein, sondern z.B. eine Frequenz, die für die Unterbringung des DPCM-Signals in einem SDH-Container günstig ist, so wird die Grundstruktur des Prädiktors nach Fig.1 entsprechend der in Fig.3 dargestellten Struktur modifiziert. Die Abweichung der Abtastfrequenz $f_T$ von der Farbträgerfrequenz $f_F$ wird durch das Verhältnis

$$k = 2\pi \frac{f_F}{f_T}$$

ausgedrückt. Der Prädiktor PR bzw. PRE ist nun in Form eines FIR-Filters mit den Koeffizienten a, b und c aufgebaut. Ein aktueller Prädiktionswert wird demnach aus den drei zeitlich davorliegenden Prädiktionswerten $P_{n-3}$, $P_{n-2}$ und $P_{n-1}$ zusammengesetzt (Addierer K1). Die Koeffizienten der Multiplizierer G1, G2 und G3 mit den Gewichtungsfaktoren a, b und c werden so gewählt, daß ihre Summe den Wert 1 (Grauwertprädiktion) ergibt und daß der Prädiktionsfehler bei beliebiger Abtastfrequenz unter Einhaltung des Nyquist-Kriteriums minimal wird. Diese Bedingungen werden für drei benachbarte Bildpunkte erfüllt für a = 0,222, b = - 0,222 und c = 1, wobei die Abtastfrequenz $f_T$ = 14,14 MHz beträgt. Die Gewichtungsfaktoren a und b sind also komplementär zueinander. Ein aktueller Prädiktionswert $P_n$ ergibt sich demnach zu:

$$P_n = P_{n-3} + 0,222 (P_{n-1} - P_{n-2}).$$

Zur mit dem Faktor 0,222 gewichteten Differenz aus den unmittelbar davorliegenden Prädiktionswerten $P_{n-1}$ und $P_{n-2}$ wird der Prädiktionswert $P_{n-3}$ addiert, der zu dem vorvorletzten Bildpunkt gehört. Im vorliegenden Beispiel wurde die Abtastfrequenz $f_T$ zu 14,14 MHZ gewählt, die für die Unterbringung von 2 FBAS-TV Signalen im SDH-Grundcontainer günstig ist. Der Faktor k beträgt dann k = 1,970356. Für andere "composite video" Signale, z.B. für NTSC-Signale, können entsprechende Koeffizienten, die eine Kompensation des Farbträgers bei beliebiger Abtastfrequenz erreichen und damit zu einer Minimierung von Störungen des Prädiktionsfehlers führen, einfach ermittelt werden. Für die Ermittlung der Koeffizienten a, b und c in Abhängigkeit des Verhältnisses

$k = 2\pi f_F/f_T$ ist folgendes Gleichungssystem zu lösen:

$a + b + c = 1$
$\cos(kn) = a \cdot \cos(k(n-1)) + b \cdot \cos(k(n-2)) + c \cdot \cos(k(n-3))$
$\cos(k(n+1)) = a \cdot \cos(k(n)) + b \cdot \cos(k(n-1)) + c \cdot \cos(k(n-2))$

Der Prädiktor gemäß Fig.3 kann hinsichtlich des Multiplizierer-Aufwandes noch vereinfacht werden. Eine solche vereinfachte Struktur zeigt Fig.4. Die Ausgangssignale der beiden ersten Verzögerungsglieder V1 und V2 werden auf den Subtrahierer K2 geführt. Das Ausgangssignal des Subtrahierers wird mittels Multiplizierer G4 mit dem Gewichtungsfaktor a = 0,22 bewertet.Das Ausgangssignal des Verzögerungsgliedes V3 wird zusammen mit dem der Gewichtung unterzogenen Signal dem Addierer K3 am Ausgang des Prädiktors zugeführt.

Das vorgestellte Verfahren/ die Anordnung ist nicht nur auf die Verarbeitung von Bildsignalen und/oder die Unterdrückung des Farbträgers beschränkt. In allen Signalen, in denen Zusatsignale insbesondere in Frequenzverkämmung eingelagert sind, können bei der DPCM-Codierung die Maßnahmen nach der Erfindung vorteilhaft eingesetzt werden, z.B. bei der Toncodierung für Aufzeichnungszwecke.

## Patentansprüche

1. Verfahren zur Aufbereitung von Prädiktionswerten bei der DPCM-Prädiktionscodierung, insbesondere von digitalisierten "composite video" Signalen, mit folgenden Schritten:

   - aus mindestens drei Prädiktionswerten ($P_{n-3}$, $P_{n-2}$, $P_{n-1}$) aus der Vergangenheit wird ein aktueller Prädiktionswert ($P_n$) zusammengesetzt,
   - für die Zusammensetzung des aktuellen Prädiktionswertes ($P_n$) aus den Prädiktionswerten ($P_{n-3}$, $P_{n-2}$, $P_{n-1}$) aus der Vergangenheit werden die Prädiktionswerte aus der Vergangenheit so gewichtet, daß der Prädiktionsfehler bei einer Abtastfrequenz für das Quellsignal, die kein Vielfaches der Frequenz eines Unterträgers ist, jedoch unter Einhaltung des Nyquist-Kriteriums minimal wird,
- die Gewichtungsfaktoren für die dem aktuellen Prädiktionswert zeitlich am nächsten liegenden Vergangenheitswerte werden zueinander komplementär gewählt.

2. Verfahren nach Anspruch 1, dadurch gekennzeichnet, daß die Gewichtungsfaktoren für die Vergangenheitswerte bei der Verarbeitung von "composite-video" Signalen so gewählt sind, daß sie zusammen den Wert 1 ergeben.

3. Verfahren nach Anspruch 2, dadurch gekennzeichnet, daß die Gewichtungsfaktoren für PAL-Signale und einer Abtastfrequenz von 14,14 MHz folgendermaßen gewählt werden:

a = 0,222
b = - 0.222
c = 1,

wobei die Gewichtungsfaktoren a und b für jene Vergangenheitswerte angewendet werden, die dem aktuellen Prädiktionswert zeitlich am nächsten liegen und der Gewichtungsfaktor c für den Vergangenheitswert angewendet wird, der zeitlich am weitesten vom aktuellen Prädiktionswert entfernt ist.

4. Prädiktor für eine DPCM-Prädiktionscodierung, bestehend aus:
- mindestens drei in Kette geschalteten Verzögerungsgliedern (V1, V2, V3) mit einer Verzögerung von jeweils einem Abtastintervall des Quellsignals,
- Gewichtungs(G1, G2, G3, G4)- und Verknüpfungsnetzwerken (K1, K2, K3) für die Gewichtung und Verknüpfung der Ausgangssignale der Verzögerungsglieder (V1, V2, V3) derart, daß der Prädiktionsfehler bei einer Abtastfrequenz für das Quellsignal, die kein Vielfaches der Frequenz eines Unterträgers ist, jedoch unter Einhaltung des Nyquist-Kriteriums minimal wird und daß die Gewichtungsfaktoren für die dem aktuellen Prädiktionswert am nächsten gelegenen Vergangenheitswerte zueinander komplementär gewählt sind.

5. Prädiktor nach Anspruch 4, dadurch gekennzeichnet, daß die Ausgänge der Verzögerungsglieder (V1, V2, V3) jeweils über Multiplizierer (G1, G2, G3) zu einem Addierer (K1) geführt sind, wobei die Gewichtungsfaktoren der Multiplizierer vorzugsweise folgendermaßen bemessen sind:

a = 0,222; b = - 0,222; c = 1,

wobei die Multiplizierer mit den Gewichtungsfaktoren a und b dem Eingang des Prädiktors am nächsten gelegen sind.

6. Prädiktor nach Anspruch 4, gekennzeichnet durch
- einen Subtrahierer (K2) für die Ausgangssignale der dem Eingang des Prädiktors am nächsten gelegenen Verzögerungsglieder (V1, V2),
- einen Multiplizierer (G4) mit einem Gewichtungsfaktor von vorzugsweise a = 0,222,
- einen Addierer (K3) am Ausgang des Prädiktors, welcher zum einen mit dem Ausgang des Subtrahierers (K2) über den Multiplizierer (G4) und zum anderen mit dem Ausgang des vom Eingang des Prädiktors aus gesehenen letzten Verzögerungsgliedes (V3) verbunden ist.

7. Anwendung des Verfahrens nach einem der Ansprüche 1 bis 3 oder des Prädiktors nach einem der Ansprüche 4 bis 6 bei einem Übertragungssystem, insbesondere einem SDH-System, dessen Abtastfrequenz kein ganzzahliges Vielfaches der Farbträgerfrequenz ist.

Fig. 1

Fig. 2

Fig. 3

Fig. 4